(19) Europäisches Patentamt
European Patent Office
Office européen des brevets

(11) **EP 3 540 087 A1**

(12) **EUROPEAN PATENT APPLICATION**
published in accordance with Art. 153(4) EPC

(43) Date of publication:
**18.09.2019 Bulletin 2019/38**

(21) Application number: **17870262.7**

(22) Date of filing: **15.05.2017**

(51) Int Cl.:
*C22C 38/58* [(2006.01)]   *C22C 38/02* [(2006.01)]
*C22C 38/00* [(2006.01)]   *C22C 38/44* [(2006.01)]
*C22C 38/48* [(2006.01)]

(86) International application number:
**PCT/KR2017/004991**

(87) International publication number:
**WO 2018/088652 (17.05.2018 Gazette 2018/20)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **14.11.2016 KR 20160151319**

(71) Applicant: **POSCO
Pohang-si, Gyeongsangbuk-do 37859 (KR)**

(72) Inventors:
• **KIM, Kwang-Min
Pohang-si
Gyeongsangbuk-do 37669 (KR)**
• **KIM, Sung Joon
Pohang-si
Gyeongsangbuk-do 37660 (KR)**
• **KIM, Ji Soo
Pohang-si
Gyeongsangbuk-do 37659 (KR)**

(74) Representative: **Zech, Stefan Markus
Meissner Bolte Patentanwälte
Rechtsanwälte Partnerschaft mbB
Postfach 86 06 24
81633 München (DE)**

(54) **AUSTENITIC STAINLESS STEEL HAVING IMPROVED HYDROGEN EMBRITTLEMENT RESISTANCE, AND HIGH-PRESSURE HYDROGEN GAS CONTAINER COMPRISING SAME**

(57)    An austenitic stainless steel improved in resistance to hydrogen brittleness and a vessel for high-pressure hydrogen gas are disclosed. The austenitic stainless steel according to one embodiment of the present invention includes by weight percent, 0.1% or less (excluding 0) of carbon(C), 1.0% or less (excluding 0) of silicon(Si), 2.0 to 7.0% of manganese(Mn), 15 to 25% of chromium (Cr), 7 to less than 10% of nickel (Ni), 0.4% or less (excluding 0) of nitrogen (N), and the remainder of iron (Fe) and other unavoidable impurities, and an SFE (stacking fault energy) of the austenite stainless steel is 40 to 70mJ/m$^2$ defined by the following formula (1).

$$SFE = 4Ni + 0.6Cr + 7.7Mn - 44.7Si + 1.2 \text{ --- formula (1)}$$

formula (1)

**EP 3 540 087 A1**

【FIG. 1】

**Description**

[Technical Field]

The present invention relates to an austenitic stainless steel and a vessel for high-pressure hydrogen gas containing the same, and more particularly, to an austenitic stainless steel improved in resistance to hydrogen brittleness and a vessel for high-pressure hydrogen gas containing the same.

[Background Art]

As the development and dissemination of fuel cell vehicles using hydrogen as fuel have expanded, it has become necessary to develop vessels and parts for storing hydrogen. A hydrogen storage vessel is also required for the fuel cell vehicles or a hydrogen filling station that handles the fuel of the fuel cell vehicles, and is composed of various parts such as a storage tank, a valve, and a pipe. In order to store high-pressure hydrogen for fuel cells and various applications, high mechanical strength, resistance to hydrogen brittleness and corrosion resistance are required.

Under the current hydrogen gas environment, a material commonly used is austenitic stainless steel 316L. 316L at a hydrogen gas pressure of 35MPa, which is a general fuel cell environment, shows good water resistance and corrosion resistance and is widely used. However, to increase the cruising range of the fuel cell vehicles, it is problematic to use 316L in an environment where the hydrogen gas pressure is increased from 35MPa to 70MPa. Therefore, much research has been conducted on various materials that can be used under a high-pressure hydrogen gas environment of 70MPa or more.

In order to withstand the high-pressure hydrogen gas in the direction of development, there is a method of increasing the strength compared with the conventional 316L material. Typically, there is a method of improving the strength by cold working. As another method, a high strength stainless steel using precipitation strengthening by precipitation has been proposed. These methods have a limitation in application due to the problem of additional costs for cold working or generation of precipitation, and the possibility of hydrogen embrittlement due to cold working and precipitation.

Patent Document 1 controls texture to improve not only strength by cold working but also resistance to hydrogen brittleness. This method is difficult to apply in the steel manufacturing process, and there is a problem of increased costs due to the addition of a process.

As a stainless steel material other than the austenitic stainless steel 316L, a ferrite-based material or a martensite-based material having high strength has been proposed. However, the diffusion rate of hydrogen in the ferrite-based material or the martensite-based material is higher than that of an austenitic material, thus hydrogen embrittlement easily occurs. Generally, even austenitic stainless steels are very vulnerable to hydrogen embrittlement when a transformation from austenite to martensite ($\gamma \rightarrow \alpha'$) occurs during deformation. Therefore, the phase stability of austenite is one of the most important factors for hydrogen embrittlement. The element that has the greatest influence on the phase stability of austenite is Ni, which has a significant effect on the economic cost of the steel.

In Patent Document 2, Mn is added in an amount of 6% or more, more preferably in an amount of 8% or more for reducing Ni to control the Md30 value showing the austenite stabilization degree to improve the resistance to hydrogen brittleness in a low temperature environment. However, due to the excessive reduction of Ni, it is necessary to add a large amount of Mn and Cu, and there is a possibility of deterioration of corrosion resistance and mechanical properties due to MnS formation.

(Patent Document 1) Korean Patent Laid-Open Publication No. 10-2006-0018250 (published on Feb. 28, 2006)

(Patent Document 2) Korean Patent Laid-Open Publication No. 10-2011-0004491 (published on Jan. 13, 2011)

[Disclosure]

[Technical Problem]

Embodiments of the present invention are directed to applying an austenitic stainless steel in which the austenite stabilization degree is increased under a high-pressure hydrogen gas environment to suppress the formation of strain-induced martensite, to a vessel body or a liner of the vessel for high-pressure hydrogen gas to improve resistance to hydrogen brittleness.

[Technical Solution]

An austenite stainless steel with improved resistance to hydrogen brittleness according to one embodiment of the present invention includes by weight percent, 0.1% or less (excluding 0) of carbon (C), 1.0% or less (excluding 0) of silicon (Si), 2.0 to 7.0% of manganese (Mn), 15 to 25% of chromium (Cr), 7 to less than 10% of nickel (Ni), 0.4% or less (excluding 0) of nitrogen (N), and the remainder of iron (Fe) and other unavoidable impurities, and has an SFE (stacking fault energy) of 40 to 70mJ/m$^2$ defined by the following formula (1).

$$SFE = 4Ni+0.6Cr+7.7Mn-44.7Si+1.2 \; --- \; formula \; (1)$$

Also, according to one embodiment of the present invention, the austenitic stainless steel may further include 3.0% or less of Mo.

Also, according to one embodiment of the present invention, the austenitic stainless steel may have a $Ni_{eq}$ of 27 or more, which is defined by the following formula (2).

$$Ni_{eq} = Ni+0.65Cr+0.98Mo+1.05Mn+0.35Si+12.6C+33.6N \; --- \; formula \; (2)$$

Also, according to one embodiment of the present invention, the austenitic stainless steel may have an RRA of 0.8 or more, which is defined by the following formula (3).

$$RRA = RA_{H2}/ \; RA_{AIR} \; --- \; formula \; (3)$$

Here, $RA_{H2}$ is the reduction ratio of area during a tensile test in a hydrogen atmosphere, and $RA_{AIR}$ is the reduction ratio of area during a tensile test in an air atmosphere.

Also, according to one embodiment of the present invention, the austenitic stainless steel may further include Nb: 0.5% or less.

Also, according to one embodiment of the present invention, the austenitic stainless steel may have a tensile strength of 840MPa or more.

Also, according to one embodiment of the present invention, the strain-induced martensite fraction of the austenitic stainless steel may be 1.0% or less.

A vessel for high-pressure hydrogen gas with improved resistance to hydrogen brittleness according to one embodiment of the present invention includes a vessel body and a liner inside the vessel body, and at least one selected from a group consisting of the vessel body and the liner comprises an austenitic stainless steel comprising by weight percent, 0.1% or less (excluding 0) of carbon (C), 1.0% or less (excluding 0) of silicon (Si), 2.0 to 7.0% of manganese (Mn), 15 to 25% of chromium (Cr), 7 to less than 10% of nickel (Ni), 0.4% or less (excluding 0) of nitrogen (N), and the remainder of iron (Fe) and other unavoidable impurities, and having an SFE (stacking fault energy) of 40 to 70mJ/m$^2$ defined by the following formula (1).

$$SFE = 4Ni+0.6Cr+7.7Mn-44.7Si+1.2 \; --- \; formula \; (1)$$

Also, according to one embodiment of the present invention, the hydrogen gas pressure may be 70MPa or more.

[Advantageous Effects]

According to the embodiments of the present invention, the Ni content of the austenitic stainless steel applied to the vessel body or the liner of the vessel for high-pressure hydrogen gas is adjusted so that the SFE (stacking fault energy) of the austenitic stainless steel is in the range of 40 to 70mJ/m$^2$. Accordingly, the stainless steel of the present invention can secure excellent resistance to hydrogen brittleness and can reduce the manufacturing cost of the vessel for high-pressure hydrogen gas by reducing the Ni content by optimizing the range of the SFE.

Further, by controlling the contents of Ni, Mn and N in the composition of the austenitic stainless steel, it is possible to stabilize the austenite by increasing the $Ni_{eq}$, thereby suppressing the formation of the strain-induced martensite acting as a cause of hydrogen embrittlement.

In addition, Nb is further added in an amount of 0.5% or less in the austenitic stainless steel, so that a high tensile strength of 840MPa or more can be ensured through grain refinement.

[Description of Drawings]

FIG. 1 is a graph showing a correlation between SFE and $Ni_{eq}$ according to embodiments of the present invention.

FIG. 2 is a graph showing a correlation between SFE and RRA according to embodiments of the present invention.

FIG. 3 is a photograph of a microstructure of a hot-rolled sheet according to an embodiment of the present invention taken by a transmission electron microscope (TEM).

FIG. 4 is a photograph of a microstructure of a hot-rolled sheet according to a comparative example of the present invention by a transmission electron microscope (TEM).

[Best Mode]

An austenitic stainless steel with improved resistance to hydrogen brittleness according to one embodiment of the present invention includes by weight percent, 0.1% or less (excluding 0) of carbon (C), 1.0% or less (excluding 0) of silicon (Si), 2.0 to 7.0% of manganese (Mn), 15 to 25% of chromium (Cr), 7 to less than 10% of nickel (Ni), 0.4% or less (excluding 0) of nitrogen (N), and the remainder of iron (Fe) and other unavoidable impurities, and has an SFE (stacking fault energy) of 40 to 70mJ/m$^2$ defined by the following formula (1).

$$SFE = 4Ni+0.6Cr+7.7Mn-44.7Si+1.2 \; --- \; formula \; (1)$$

[Modes of the Invention]

Hereinafter, the embodiments of the present disclosure will be described in detail with reference to the accompanying drawings. The following embodiments are provided to transfer the technical concepts of the present disclosure to one of ordinary skill in the art. However, the present disclosure is not limited to these embodiments, and may be embodied in another form. In the drawings, parts that are irrelevant to the descriptions may be not shown in order to clarify the present disclosure, and also, for easy understanding, the sizes of components are more or less exaggeratedly shown.

A high-pressure hydrogen gas vessel improved in resistance to hydrogen brittleness according to an embodiment of the present invention includes a vessel body and a liner inside the vessel body.

For example, the hydrogen gas pressure inside the vessel for high-pressure hydrogen gas may be 70MPa or more.

At least one selected from a group consisting of the vessel body and the liner includes an austenitic stainless steel including, by weight percent, 0.1% or less (excluding 0) of carbon (C), 1.0% or less (excluding 0) of silicon (Si), 2.0 to 7.0% of manganese (Mn), 15 to 25% of chromium (Cr), 7 to less than 10% of nickel (Ni), 0.4% or less (excluding 0) of nitrogen (N), and the remainder of iron (Fe) and other unavoidable impurities.

Hereinafter, the component system of the austenitic stainless steel according to one embodiment of the present invention will be described in more detail. Unless otherwise stated, the content of each component means weight percent.

C: 0.1% or less (excluding 0)

C is an element effective for stabilizing austenite, suppressing δ-ferrite and increasing strength by solid-solution strengthening, but it is easily combined with carbide forming elements (Cr, Ti, Nb, etc.) which reduce the corrosion resistance, ductility and toughness of the base material. Accordingly, the C content is preferably 0.1% or less.

Si: 1.0% or less (excluding 0)

Si is an element effective for solid-solution strengthening, but when it is added excessively, it forms an intermetallic compound such as a sigma phase, which reduces the ductility and toughness of the base material. Accordingly, the Si content is preferably 1.0% or less.

Mn: 2.0 to 7.0%

Like N, Mn is an austenite stabilizing element that suppresses the formation of strain-induced martensite and is an element capable of replacing expensive Ni. However, when it is added excessively, MnS is formed thereby likely causing corrosion of the base material. Accordingly, it is preferable to limit the Mn content to 2.0 to 7.0%.

Cr: 15 to 25%

Cr is an alloying element which must be added to improve corrosion resistance in stainless steel. In order to secure corrosion resistance, Cr is required to be added in an amount of 15% or more. However, when it is added excessively, Cr is an element for producing ferrite, so that excessive δ-ferrite remains to degrade hot workability, and the austenite becomes unstable. Accordingly, it is preferable to limit the Cr content to the upper limit of 25%.

Ni: 7 to less than 10%

Ni is an austenite stabilizing element together with Mn and N, and Mn and N can be added in place of Ni, which is expensive, for cost reduction. However, excessive reduction of the Ni content reduces the corrosion resistance and hot workability due to excessive Mn and N contents, or makes it difficult to secure corrosion resistance due to the reduction in the Cr content. Accordingly, in order to secure the intended resistance to hydrogen brittleness of the present invention, the lower limit of Ni is set to 7%. In addition, when added excessively, a large increase of the SFE is caused and a high density dislocation wall (HDDW) is generated by a planar dislocation multiplication. The HDDW is a local plasticity region due to hydrogen in the steel, and acts as a starting point of hydrogen embrittlement, which can reduce resistance to hydrogen brittleness. Accordingly, an excessive addition of Ni has disadvantages not only in an increase in material cost but also in resistance to hydrogen brittleness, so it is preferable to limit the Ni content to less than 10%.

N: 0.4% or less (excluding 0)

N is an element that stabilizes the austenite and enhances strength through solid-solution strengthening and precipitation strengthening. However, when N is excessively added, hot workability is reduced, so the content of N is limited to 0.4% or less.

S: 0.003% or less (excluding 0)

S is a trace amount of an impurity element and is segregated at grain boundaries and is a main element causing processing cracks in hot rolling. Therefore, it is limited to 0.003% or less or as low as possible.

The austenitic stainless steel according to one embodiment of the present invention may further include 3.0% or less of Mo.

Mo is an element effective for improving the corrosion resistance in stainless steel and is an element capable of increasing the degree of austenite stabilization for preventing the formation of strain-induced martensite as defined in the present invention. However, when added excessively, the material cost increases. Accordingly, the Mo content is limited to 3.0% or less.

The austenitic stainless steel according to one embodiment of the present invention may further include Nb: 0.5% or less.

Nb is an effective element for improving the strength through grain refinement, and it can secure a high tensile strength of 840MPa or more through grain refinement by the addition of Nb to the austenitic stainless steel. However, if the content of Nb is excessive, it reduces the hot workability or reduces the corrosion resistance due to excessive precipitates. Accordingly, the Nb content is limited to 0.5% or less.

The austenitic stainless steel has an SFE (stacking fault energy) of 40 to 70mJ/m$^2$, which is defined by the following formula (1).

$$SFE = 4Ni+0.6Cr+7.7Mn-44.7Si+1.2 \ \text{--- formula (1)}$$

If the SFE is in the range of 40 to 70mJ/m$^2$, the strain-induced martensite transformation does not occur during the transformation, and twin develops to be able to improve the strength and resistance to hydrogen brittleness simultaneously. Further, the tensile strength can be improved through grain refinement by adding Nb. When the SFE is less than 40mJ/m$^2$, strain-induced martensite transformation occurs due to deformation in the hydrogen environment, which makes the austenitic stainless steel susceptible to hydrogen embrittlement. The austenitic stainless steel with a high SFE of more than 70mJ/m$^2$ has high austenite stabilization, so that the transformation of strain-induced martensite does not occur. However, the HDDW is generated by the high planar dislocation multiplication. The HDDW is the local plasticity region due to hydrogen in the steel, and acts as a starting point of hydrogen embrittlement, which can reduce resistance to hydrogen brittleness.

According to one embodiment of the present invention, the austenitic stainless steel may have a Ni$_{eq}$ of 27 or more, which is defined by the following formula (2).

$$Ni_{eq} = Ni+0.65Cr+0.98Mo+1.05Mn+0.35Si+12.6C+33.6N \text{ --- formula (2)}$$

That is, by controlling the contents of Ni, Mn and N in the composition of the austenitic stainless steel to increase the $Ni_{eq}$, it is possible to stabilize the austenite, thereby suppressing the formation of the strain-induced martensite which acts as a cause of hydrogen embrittlement.

Therefore, when the $Ni_{eq}$ of the austenitic stainless steel is controlled to 27 or more, the austenite has a high degree of stabilization, and the strain-induced martensite fraction is 1.0% or less. Accordingly, the hydrogen embrittlement due to the martensite transformation caused by deformation can be suppressed.

According to one embodiment of the present invention, the strain-induced martensite fraction of the austenitic stainless steel may be 1.0% or less.

According to one embodiment of the present invention, the austenitic stainless steel may have an RRA of 0.8 or more, defined by the following formula (3).

$$RRA = RA_{H2} / RA_{AIR} \text{ --- formula (3)}$$

Here, $RA_{H2}$ is the reduction ratio of area during a tensile test in a hydrogen atmosphere, and $RA_{AIR}$ is the reduction ratio of area during a tensile test in an air atmosphere. RRA is the value obtained by dividing the reduction ratio of area during the tensile test in the hydrogen atmosphere by the reduction ratio of area during the tensile test in the air atmosphere.

The larger the value of RRA for judging the hydrogen brittleness, the lower the ductility due to the hydrogen gas and the smaller the occurrence of embrittlement, which means excellent resistance to hydrogen brittleness. When the RRA is 0.8 or more, it can be judged that the resistance to hydrogen brittleness is excellent because the deterioration of ductility and the occurrence of embrittlement are slight in a high-pressure hydrogen environment.

According to one embodiment of the present invention, the austenitic stainless steel further including Nb of 0.5% or less may have a tensile strength of 840MPa or more.

The austenitic stainless steel included in the vessel for high-pressure hydrogen gas according to one embodiment of the present invention is produced by subjecting a slab having the above composition to hot rolling and annealing at a temperature of 900 to 1,200°C.

In the process of annealing after hot rolling, the annealing temperature greatly influences the residual stress relief and microstructure.

The annealing temperature is 900 to 1,200°C. When the annealing temperature is less than 900°C, large carbides are generated thereby making the structure uneven or $Cr_{23}C_6$ precipitates are formed around the grain boundaries, so that intergranular corrosion can occur. When the annealing temperature is higher than 1,200°C, the grains can be extremely enlarged. Accordingly, it is preferable to limit the annealing temperature to 900 to 1,200°C.

Hereinafter, the present invention will be described in more detail with reference to examples.

Examples and Comparative Examples

Ingots containing the respective composition components according to Examples 1 to 11 and Comparative Examples 1 to 4 in Table 1 were cast and hot-rolled, annealed at a temperature of 1,100°C, and pickled to prepare a hot-rolled sheet having a thickness of 15mm.

[Table 1]

| (Weight Percent%) | C | Si | Mn | Cr | Ni | N | Mo | Nb |
|---|---|---|---|---|---|---|---|---|
| Example1 | 0.03 | 0.51 | 5.1 | 20.2 | 7.0 | 0.31 | 2.0 | - |
| Example2 | 0.02 | 0.52 | 5.2 | 19.4 | 9.5 | 0.29 | 2.0 | - |
| Example3 | 0.03 | 0.48 | 2.5 | 18.7 | 8.5 | 0.31 | 2.0 | - |
| Example4 | 0.1 | 0.51 | 5.0 | 19.8 | 8.1 | 0.32 | 2.0 | - |
| Example5 | 0.02 | 0.48 | 5.1 | 16.4 | 9.0 | 0.30 | 2.0 | - |
| Example6 | 0.02 | 0.50 | 4.3 | 18.3 | 7.2 | 0.11 | - | - |
| Example7 | 0.02 | 0.48 | 5.8 | 20.2 | 8.1 | 0.31 | 1.5 | - |

(continued)

| (Weight Percent%) | C | Si | Mn | Cr | Ni | N | Mo | Nb |
|---|---|---|---|---|---|---|---|---|
| Example8 | 0.03 | 0.52 | 5.2 | 18.9 | 8.3 | 0.28 | 2.7 | - |
| Example9 | 0.02 | 0.52 | 3.1 | 22.2 | 9.6 | 0.16 | - | - |
| Example10 | 0.02 | 0.52 | 5.0 | 19.8 | 9.8 | 0.32 | - | - |
| Example11 | 0.02 | 0.52 | 4.9 | 19.7 | 9.8 | 0.31 | 1.9 | 0.2 |
| Comparative Example1 | 0.05 | 0.40 | 1.1 | 18.3 | 8.1 | 0.04 | - | - |
| Comparative Example2 | 0.02 | 0.48 | 1.0 | 16.7 | 10.1 | 2.1 | 0.04 | - |
| Comparative Example3 | 0.04 | 0.52 | 4.7 | 21.9 | 13.2 | 2.0 | 0.33 | - |
| Comparative Example4 | 0.02 | 0.52 | 5.1 | 19.9 | 11.5 | 2.0 | 0.29 | - |

In accordance with this, the respective physical properties of the prepared hot-rolled sheets of Examples 1 to 11 and Comparative Examples 1 to 4 were measured and are shown in Table 2 below.

[Table 2]

| | TS (MPa) | RRA | $Ni_{eq}$ | SFE ($mJ/m^2$) | Strain-induced martensite fraction (%) |
|---|---|---|---|---|---|
| Example1 | 753 | 0.88 | 38.4 | 57.8 | 0.3 |
| Example2 | 711 | 0.97 | 39.7 | 67.6 | < 0.1 |
| Example3 | 715 | 0.88 | 36.2 | 44.2 | 0.5 |
| Example4 | 775 | 0.98 | 40.5 | 61.2 | < 0.1 |
| Example5 | 726 | 0.90 | 37.5 | 64.9 | 0.3 |
| Example6 | 713 | 0.83 | 27.7 | 51.7 | 0.6 |
| Example7 | 748 | 1.01 | 39.6 | 68.9 | < 0.1 |
| Example8 | 715 | 0.94 | 38.7 | 62.5 | < 0.1 |
| Example9 | 712 | 0.87 | 33.1 | 53.5 | 0.4 |
| Example10 | 718 | 0.95 | 39.2 | 67.5 | < 0.1 |
| Example11 | 845 | 0.99 | 40.4 | 66.7 | < 0.1 |
| Comparative Example1 | 833 | 0.32 | 23.3 | 35.2 | 18.6 |
| Comparative Example2 | 587 | 0.48 | 25.8 | 37.9 | 9.3 |
| Comparative Example3 | 819 | 0.85 | 46.0 | 80.1 | < 0.1 |
| Comparative Example4 | 701 | 0.89 | 41.7 | 75.2 | < 0.1 |

The hot-rolled sheets of Examples 1 to 11 and Comparative Examples 1 to 4, in which the amounts of various alloying elements were changed, were subjected to a tensile test. The tensile test specimens having a round bar diameter of 6mm were taken. The tensile test was carried out to measure the RRA which means tensile strength (TS) and resistance to hydrogen brittleness, by a strain rate of $1.25 \times 10^{-5}$/s, in an air atmosphere at room temperature or in high-pressure hydrogen gas of 70MPa at room temperature. The strain-induced martensite fraction produced after the tensile test in hydrogen gas, which is one of the judging characteristics of hydrogen brittleness, was measured at room temperature using a ferrite scope.

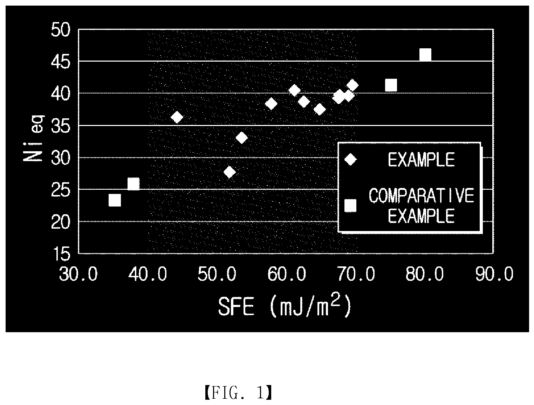

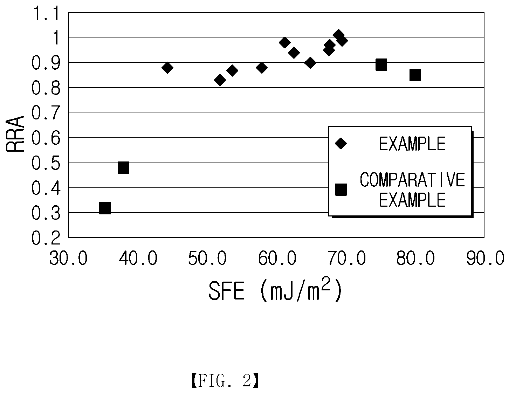

FIG. 1 is a graph showing a correlation between SFE and $Ni_{eq}$ according to embodiments of the present invention. FIG. 2 is a graph showing a correlation between SFE and RRA according to embodiments of the present invention.

Referring to FIGS. 1 and 2 and Tables 1 and 2, Examples 1 to 10 controlled the contents of Ni, N, Mn, C, Mo, and Cr thereby being able to secure the stabilized austenite structure as a strain-induced martensite fraction of 1.0% or less. As a result, it was found that the RRA was 0.8 or more, which can obtain excellent resistance to hydrogen brittleness.

Referring to FIGS. 1 and 2, when the Ni content was 10% or more, the RRA was reduced due to the high SFE despite of the Ni content added, which showed detrimental effects in not only in an increase of material cost but also in resistance to hydrogen brittleness.

In Comparative Examples 1 and 2, $Ni_{eq}$ was shown as a value lower than 27, indicating that embrittlement due to high-pressure hydrogen gas may appear as the martensite transformation during the deformation easily occurs. Also, the SFE was shown as a value lower than $40mJ/m^2$, meaning that the strain-induced martensite transformation occurred during the deformation. The actual strain-induced martensite fraction was measured to be very high, and the resistance to hydrogen brittleness was increased as a result. Accordingly, the RRA was as low as 0.8 or less.

In Comparative Examples 3 and 4, $Ni_{eq}$ was shown as a very high value of 41 or more, which means that it has very stable austenite. However, although they had a high $Ni_{eq}$ value, the RRA was shown as a value of less than 0.9, which was less than Examples 1 to 11 having a $Ni_{eq}$ of less than 41.

This can be explained by the SFE. If the SFE is in the range of 40 to $70mJ/m^2$, the strain-induced martensite transformation does not occur during the deformation and the twin develops, thus the strength and resistance to hydrogen brittleness can be improved simultaneously. However, the austenitic stainless steel with a high SFE of more than $70mJ/m^2$ has high austenite stabilization, so that the transformation of strain-induced martensite does not occur, but the HDDW is generated by the high planar dislocation multiplication. The HDDW is the local plasticity region due to hydrogen in the steel, and acts as a starting point of hydrogen embrittlement, which can reduce resistance to hydrogen brittleness.

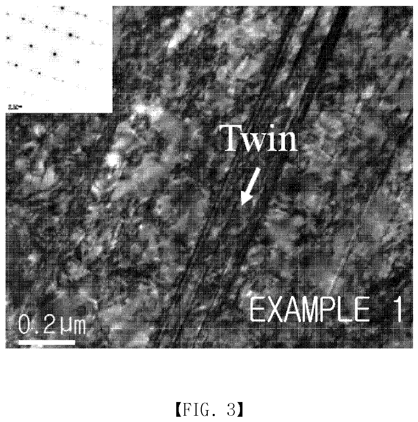

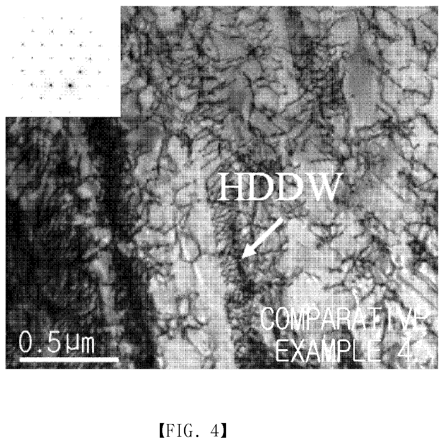

FIG. 3 is a photograph of a microstructure of a hot-rolled sheet according to an embodiment of the present invention taken by a transmission electron microscope (TEM). FIG. 4 is a photograph of a microstructure of a hot-rolled sheet according to a comparative example of the present invention by a transmission electron microscope (TEM).

Referring to FIGS. 3 and 4, FIG. 3 is a photograph of the TEM microstructure of the hot-rolled sheet of Example 1, and FIG. 4 is a photograph of the TEM microstructure of the hot-rolled sheet of Comparative Example 4.

In Example 1, the SFE was $57.8mJ/m^2$ in the range of 40 to $70mJ/m^2$ and a twin developed during the deformation. In Comparative Example 4, the SFE was $75.2mJ/m^2$ out the range of 40 to $70mJ/m^2$ and it can be seen that an HDDW was generated instead of a twin during deformation.

From the result of Example 11, it can be seen that when Nb is added, grain refinement occurs and the tensile strength shows a high value of 840MPa or more.

From the result of Example 6, it was found that by controlling the austenite stabilizing element, a $Ni_{eq}$ of 27 or more can be obtained and a low strain-induced martensite fraction of less than 1% can be obtained even under a high-pressure hydrogen gas environment, which is required in the present invention. It was found that the RRA was 0.8 or more, which can obtain excellent resistance to hydrogen brittleness.

While the present disclosure has been particularly described with reference to exemplary embodiments, it should be understood by those skilled in the art that various changes in form and details may be made without departing from the spirit and scope of the present disclosure.

[Industrial Applicability]

The austenitic stainless steel improved in resistance to hydrogen brittleness according to the embodiments of the present invention can be applied to a vessel for high-pressure hydrogen gas or the like.

**Claims**

1. An austenite stainless steel with improved resistance to hydrogen brittleness, the austenite stainless steel comprising by weight percent, 0.1% or less (excluding 0) of carbon (C), 1.0% or less (excluding 0) of silicon (Si), 2.0 to 7.0% of manganese (Mn), 15 to 25% of chromium (Cr), 7 to less than 10% of nickel (Ni), 0.4% or less (excluding 0) of nitrogen (N), and the remainder of iron (Fe) and other unavoidable impurities, and having an SFE (stacking fault energy) of 40 to $70mJ/m^2$ defined by the following formula (1):

$$SFE = 4Ni+0.6Cr+7.7Mn-44.7Si+1.2 \text{ --- formula (1)}.$$

2. The austenitic stainless steel with improved resistance to hydrogen brittleness according to claim 1, wherein the austenitic stainless steel further comprises 3.0% or less of Mo.

3. The austenitic stainless steel with improved resistance to hydrogen brittleness according to claim 2, wherein the austenitic stainless steel has a $Ni_{eq}$ of 27 or more, defined by the following formula (2):

$$Ni_{eq} = Ni+0.65Cr+0.98Mo+1.05Mn+0.35Si+12.6C+33.6N \text{ --- formula (2)}.$$

4. The austenitic stainless steel with improved resistance to hydrogen brittleness according to claim 1, wherein the austenitic stainless steel has an RRA of 0.8 or more, defined by the following formula (3):

$$RRA = RA_{H2}/ RA_{AIR} \text{ --- formula (3)}$$

here, $RA_{H2}$ is the reduction ratio of area during a tensile test in a hydrogen atmosphere, and $RA_{AIR}$ is the reduction ratio of area during a tensile test in an air atmosphere.

5. The austenitic stainless steel with improved resistance to hydrogen brittleness according to claim 1, wherein the austenitic stainless steel further comprises Nb: 0.5% or less.

6. The austenitic stainless steel with improved resistance to hydrogen brittleness according to claim 5, wherein the austenitic stainless steel has a tensile strength of 840MPa or more.

7. The austenitic stainless steel with improved resistance to hydrogen brittleness according to claim 1, wherein the austenitic stainless steel has a strain-induced martensite fraction of 1.0% or less.

8. A vessel for high-pressure hydrogen gas with improved resistance to hydrogen brittleness,
the vessel comprising a vessel body and a liner inside the vessel body, and at least one selected from a group consisting of the vessel body and the liner comprising an austenitic stainless steel which comprises by weight percent, 0.1% or less (excluding 0) of carbon (C), 1.0% or less (excluding 0) of silicon (Si), 2.0 to 7.0% of manganese (Mn), 15 to 25% of chromium (Cr), 7 to less than 10% of nickel (Ni), 0.4% or less (excluding 0) of nitrogen (N), and the remainder of iron (Fe) and other unavoidable impurities, and has an SFE (stacking fault energy) of 40 to 70mJ/m$^2$ defined by the following formula (1):

$$SFE = 4Ni+0.6Cr+7.7Mn-44.7Si+1.2 \text{ --- formula (1)}.$$

9. The vessel for high-pressure hydrogen gas with improved resistance to hydrogen brittleness according to claim 8, wherein the hydrogen gas pressure is 70MPa or more.

【FIG. 1】

【FIG. 2】

【FIG. 3】

【FIG. 4】

## INTERNATIONAL SEARCH REPORT

| | International application No. |
|---|---|
| | **PCT/KR2017/004991** |

### A. CLASSIFICATION OF SUBJECT MATTER

*C22C 38/58(2006.01)i, C22C 38/02(2006.01)i, C22C 38/00(2006.01)i, C22C 38/44(2006.01)i*

According to International Patent Classification (IPC) or to both national classification and IPC

### B. FIELDS SEARCHED

Minimum documentation searched (classification system followed by classification symbols)
C22C 38/58; C21D 9/46; C22C 38/00; C22C 38/60; B23K 9/23; B23K 35/30; C22C 38/02; C22C 38/44

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: stainless, austenite, hydrogen, organic, martensite, nickel, chrome, manganese, silicon, carbon, nitrogen

### C. DOCUMENTS CONSIDERED TO BE RELEVANT

| Category* | Citation of document, with indication, where appropriate, of the relevant passages | Relevant to claim No. |
|---|---|---|
| X | JP 2010-121190 A (NISSHIN STEEL CO., LTD.) 03 June 2010<br>See paragraphs [0036], [0039] and claims 1, 2. | 1-9 |
| A | JP 2016-166401 A (NIPPON STEEL & SUMITOMO METAL) 15 September 2016<br>See paragraphs [0063]-[0065] and claims 1, 4. | 1-9 |
| A | JP 07-144294 A (JAPAN STEEL WORKS LTD.) 06 June 1995<br>See paragraph [0009] and claims 1-3. | 1-9 |
| A | KR 10-2006-0018250 A (SUMITOMO METAL INDUSTRIES, LTD.) 28 February 2006<br>See paragraph [0067] and claims 1-3. | 1-9 |
| A | KR 10-1289518 B1 (NIPPON STEEL & SUMITOMO METAL CORPORATION)<br>24 July 2013<br>See paragraph [0090] and claims 1-3. | 1-9 |

|  |  |  |  |
|---|---|---|---|
| ☐ | Further documents are listed in the continuation of Box C. | ☒ | See patent family annex. |

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 AUGUST 2017 (10.08.2017) | **10 AUGUST 2017 (10.08.2017)** |

| Name and mailing address of the ISA/KR | Authorized officer |
|---|---|
| Korean Intellectual Property Office<br>Government Complex-Daejeon, 189 Seonsa-ro, Daejeon 302-701, Republic of Korea | |
| Facsimile No. +82-42-481-8578 | Telephone No. |

Form PCT/ISA/210 (second sheet) (January 2015)

**INTERNATIONAL SEARCH REPORT**
Information on patent family members

International application No.

**PCT/KR2017/004991**

| Patent document cited in search report | Publication date | Patent family member | Publication date |
|---|---|---|---|
| JP 2010-121190 A | 03/06/2010 | NONE | |
| JP 2016-166401 A | 15/09/2016 | NONE | |
| JP 07-144294 A | 06/06/1995 | EP 0658396 A1 | 21/06/1995 |
| | | JP 02893236 B2 | 17/05/1999 |
| KR 10-2006-0018250 A | 28/02/2006 | CA 2528743 A1 | 23/12/2004 |
| | | CA 2528743 C | 23/11/2010 |
| | | CN 1833043 A | 13/09/2006 |
| | | CN 1833043 B | 22/09/2010 |
| | | EP 1645649 A1 | 12/04/2006 |
| | | EP 1645649 B1 | 30/07/2014 |
| | | JP 04539559 B2 | 08/09/2010 |
| | | KR 10-0689783 B1 | 08/03/2007 |
| | | US 2006-0193743 A1 | 31/08/2006 |
| | | US 2011-0064649 A1 | 17/03/2011 |
| | | US 8696835 B2 | 15/04/2014 |
| | | WO 2004-111285 A1 | 23/12/2004 |
| KR 10-1289518 B1 | 24/07/2013 | CN 102639742 A | 15/08/2012 |
| | | CN 102639742 B | 30/03/2016 |
| | | JP 05056985 B2 | 24/10/2012 |
| | | KR 10-2012-0083930 A | 26/07/2012 |
| | | US 2012-0237388 A1 | 20/09/2012 |
| | | WO 2011-062152 A1 | 26/05/2011 |

Form PCT/ISA/210 (patent family annex) (January 2015)

**EP 3 540 087 A1**

**Patent documents cited in the description**

- KR 1020060018250

- KR 1020110004491